# EUROPÄISCHE PATENTSCHRIFT

(11) **EP 2 545 418 B1**
(45) Veröffentlichungstag und Bekanntmachung des Hinweises auf die Patenterteilung: **20.08.2014**
(21) Anmeldenummer: 11707794.1
(22) Anmeldetag: 25.02.2011
(51) Int. Cl.: G05B 19/416

(54) **VERFAHREN ZUR BESTIMMUNG EINES OPTIMIERTEN SOLLKURVENVERLAUFS BEI EINER MEHRACHSIGEN MASCHINE ZUR FLIEGENDEN BEARBEITUNG VON FÖRDERGUT**
METHOD FOR DETERMINING AN OPTIMIZED DESIRED CURVE PROFILE IN A MULTI-SHAFT MACHINE FOR THE ON-THE-FLY PROCESSING OF MATERIAL TO BE CONVEYED
PROCÉDÉ DE DÉTERMINATION D'UN TRACÉ DE COURBE NOMINALE OPTIMISÉ DANS UNE MACHINE À PLUSIEURS AXES POUR LE TRAITEMENT VOLANT DE PRODUIT TRANSPORTÉ

(30) Priorität: 12.03.2010 DE 102010011382
(43) Veröffentlichungstag der Anmeldung: 16.01.2013
(73) Patentinhaber: Sew-Eurodrive GmbH & Co. KG, 76646 Bruchsal (DE)
(72) Erfinder: PFAFF, Rainer, 76703 Kraichtal (DE)
(86) Internationale Anmeldenummer: PCT/EP2011/000927
(87) Internationale Veröffentlichungsnummer: WO 2011/110289

(56) Entgegenhaltungen:
- EP-A1- 1 956 453
- DE-A1- 19 702 281
- DE-B3-102007 010 700
- US-A1- 2009 160 504

## Beschreibung

Die Erfindung betrifft ein Verfahren zur Bestimmung eines optimierten Sollkurvenverlaufs bei einer mehrachsigen Maschine zur fliegenden Bearbeitung von Fördergut.

Bei fliegenden Sägen ist bekannt, dass der Fachmann Parameter von Hand optimiert, indem er Beschleunigungswerte geringfügig modifiziert und dann die beobachtet. Danach folgt gegebenenfalls eine weitere Modifizierung.

Der Erfindung liegt daher die Aufgabe zugrunde, eine fliegende Bearbeitung von Fördergut weiterzubilden.

Erfindungsgemäß wird die Aufgabe bei dem Verfahren zur Bestimmung eines optimierten Sollkurvenverlaufs bei einer mehrachsigen Maschine zur fliegenden Bearbeitung von Fördergut nach den in Anspruch 1 angegebenen Merkmalen gelöst.

Wichtige Merkmale der Erfindung bei dem Verfahren sind, dass es zur Bestimmung eines optimierten Sollkurvenverlaufs bei einer mehrachsigen Maschine zur fliegenden Bearbeitung von Fördergut vorgesehen ist,
wobei das Fördergut von einem als erste Maschinenachse der Maschine vorgesehenen Masterantrieb mit einer Fördergeschwindigkeit beförderbar ist,
wobei ein das Fördergut bearbeitendes Werkzeug von einem ersten, als zweite Maschinenachse der Maschine vorgesehenen Slaveantrieb quer zur Fördergeschwindigkeitsrichtung bewegbar angeordnet ist,
wobei ein zweiter, als dritte Maschinenachse der Maschine vorgesehenen Slaveantrieb, insbesondere Linearmotor oder Spindelmotor, vorgesehen ist, von dem das Werkzeug entlang der Förderrichtung bewegbar ist,
wobei
- in einem ersten Schritt wird aus einer Fördergeschwindigkeit (v_Foerder), einer Schnitttiefe, insbesondere einer quer zur Fördergeschwindigkeitsrichtung liegenden Schnitttiefe, und aus der maximalen Beschleunigung und Bremsbeschleunigung des ersten Servoantriebs (a_Servo,max) ein Schnittbereich (s_weg) berechnet,
- in einem zweiten Schritt unter Berücksichtigung der maximal zulässigen Beschleunigung (a_lin, max) des zweiten Slaveantriebs, insbesondere Linearantriebs, die Schnittlänge s1(v_Foerder) in Förderrichtung bestimmt wird,
- in einem dritten Schritt diese Schnittlänge (s1(v_Foerder)) verglichen wird mit einer vorgegebenen Soll-Schnittlänge (s1) und dann der erste und zweite Schritt solange mit einer jeweils veränderten, insbesondere jeweils zur vorher verwendeten erhöhten, Fördergeschwindigkeit (v_Foerder) wiederholt werden bis die Schnittlänge ( s1 (v_Foerder)) der vorgegebenen Soll-Schnittlänge (s1) gleicht oder nur eine vorgegebene Abweichung aufweist oder unterschreitet,
- in einem vierten Schritt die zu den letzten beiden ausgeführten ersten und zweiten Schritten zugehörigen Positionsverläufe der beiden Slaveantriebe in Abhängigkeit von der jeweiligen Position des Masterantriebs als Sollpositionsverläufe abgespeichert werden, insbesondere wobei die zuletzt verwendet Fördergeschwindigkeit als maximal mögliche Fördergeschwindigkeit v_Foerder, max) abgespeichert wird.

Von Vorteil ist dabei, dass eine automatische Reduzierung der Maschinenbelastung und eine Optimierung des Durchsatzes erreichbar ist, insbesondere bei der fliegenden Bearbeitung von Transportgütern. Die Bestimmung des Sollkurvenverlaufs ist in Echtzeit ermöglicht und das Verfahren somit online im Betrieb einsatzfähig, insbesondere auch bei stetig wechselnden Bearbeitungsentfernungen, Bearbeitungsdaüern und Bearbeitungswegen. Weiter vorteilig ist bei der Erfindung, dass der Sollpositionsverlauf der Slaveantriebspositionen in Abhängigkeit von der Masterantriebsposition bestimmt wird, indem die maximalen Beschleunigungen beziehungsweise Bremsbeschleunigungen der Antriebe zugrunde gelegt werden. Somit ist bei Absenken der Fördergeschwindigkeit ein langsameres Durchfahren desselben Sollpositionsverlaufs ermöglicht, wobei auf diese Weise ein optimaler sanfter, also ruckarmer, Verlauf ausführbar ist. Außerdem verbleiben dann für den Regler genügend Reserven, insbesondere Stellgrößenreserven, um ein Regeln unter hoher Regelgüte ausführbar zu machen.

Des Weiteren werden Totzeiten und auch hohe Beschleunigungen vermeidbar. Darüber hinaus ist auch eine maximale Fördergeschwindigkeit bestimmt und somit der schnellstmögliche Durchlauf des Sollpositionsverlaufs ausführbar.

Das Verfahren ermöglicht auch die Bestimmung der maximalen Schnitttiefe, Schnittdauer und Synchronisationswege.

Bei einer vorteilhaften Ausgestaltung wird der Slaveantrieb in Abhängigkeit von der jeweiligen Position des Masterantriebs auf den jeweils zu der Position des Masterantriebs zugeordneten Sollpositionsverlauf hin geregelt. Von Vorteil ist dabei, dass die Software von einer elektronischen Kurvenscheibe einsetzbar ist, insbesondere für den jeweiligen Slaveantrieb.

Bei einer vorteilhaften Ausgestaltung ist das Werkzeug ein Schneide-Werkzeug, insbesondere ein Messer oder ein anderes Mittel zum Schneiden aufweist, wie beispielsweise eine Kreissäge oder eine Schere. Von Vorteil ist dabei, dass eine fliegende Bearbeitung mit geringem Ruck und möglichst geringen Beschleunigungen ermöglicht ist.

Bei einer vorteilhaften Ausgestaltung ist das Fördergut von dem Masterantrieb mit der im letzten Schritt bestimmten maximalen Fördergeschwindigkeit beförderbar. Von Vorteil ist dabei, dass ein schnellstmögliches Ausführen der Bearbeitung ermöglicht ist.

Bei einer vorteilhaften Ausgestaltung ist ein das Fördergut bearbeitendes Werkzeug von einem ersten Slaveantrieb quer zur Fördergeschwindigkeitsrichtung mit einer maximalen Beschleunigung beschleunigbar und mit einer maximalen Bremsbeschleunigung abbremsbar. Von Vorteil ist dabei, dass die Bearbeitung des Werkstücks trotz der Bewegung in Förderrichtung quer zur Förderrichtung ermöglicht ist.

Bei einer vorteilhaften Ausgestaltung ist ein zweiter Slaveantrieb vorgesehen, von dem das Werkzeug entlang der Förderrichtung bewegbar ist bis zu einem maximalen Schnittlängenwert. Von Vorteil ist dabei, dass das Werkzeug mit dem Fördergut, also Werkstück, mitbewegbar ist und somit fliegend bearbeitbar ist.

Bei einer vorteilhaften Ausgestaltung ist beim ersten Schritt die maximale Geschwindigkeit des Servoantriebs v_Servo, max als begrenzender Wert wirksam. Von Vorteil ist dabei, dass die Randbedingungen einhaltbar sind.

Bei einer vorteilhaften Ausgestaltung wird beim zweiten Schritt die Geschwindigkeit des zweiten Slaveantriebs in Förderrichtung begrenzt durch die maximale Geschwindigkeit v_lin, max des und durch den maximalen Verfahrweg y_max des zweiten Slaveantriebs quer zur Förderrichtung. Von Vorteil ist dabei, dass weitere Randbedingungen einhaltbar sind.

Bei einer vorteilhaften Ausgestaltung ist die Schnittlänge der Abstand in Förderrichtung zwischen zwei in Förderrichtung aufeinander folgenden Positionen, bei denen das Werkzeug in Wirkverbindung mit dem Fördergut tritt, insbesondere einen Schnitt in Querrichtung beginnt. Von Vorteil ist dabei, dass die Bestimmung des Sollpositionsverlaufs bei verschiedenen Schnittlängen ausführbar ist. Somit muss das Werkstück nicht in regelmäßigen Abständen bearbeitet werden sondern es darf auch in unregelmäßigen Abständen bearbeitet werden. Hierzu ist allerdings eine rechtzeitige Mitteilung der geplanten Schnittstellen an die Steuereinrichtung notwendig, da diese dann mittels des erfindungsgemäßen Verfahrens den Sollpositionsverlauf vorher bestimmen muss.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

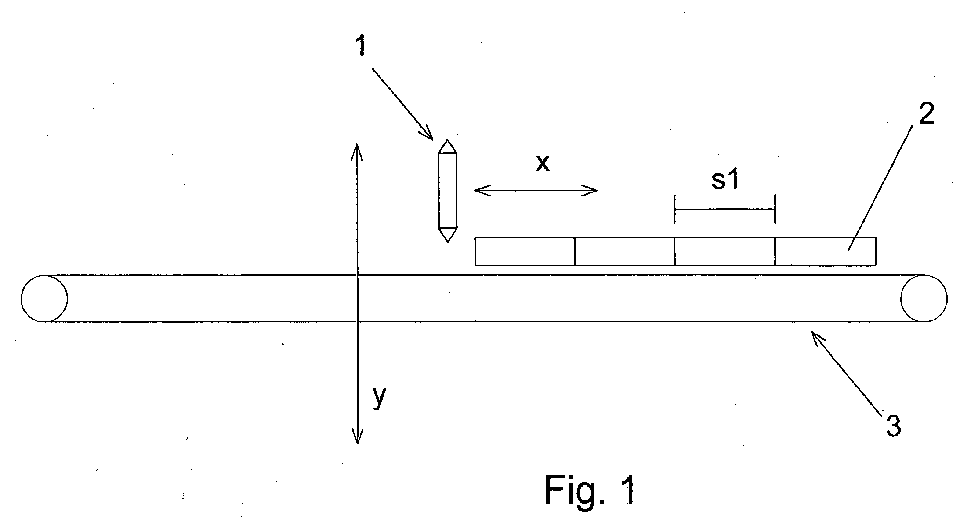

In der Figur 1 ist das Prinzip der Erfindung schematisch skizziert. Dabei ist als Beispiel eine fliegende Säge gezeigt.

Hierbei ist ein Werkzeug 1 angetrieben von einem Slaveantrieb. Das Werkzeug 1 ist beispielsweise als Schnittwerkzeug, wie Messer oder rotierendes Messer ausführbar.

Ein zu schneidendes Werkstück 2 wird auf einem Förderband 3 befördert, das von einem Masterantrieb angetrieben ist. Die Förderrichtung liegt in der mit x bezeichneten Richtung.

Das Werkzeug 1 ist vom Slaveantrieb in zur x-Richtung transversaler Richtung hin und her verfahrbar, wobei die Verfahrrichtung mit y bezeichnet wird.

Der Slaveantrieb und der Masterantrieb sind beispielsweise als Linearantrieb und/oder als rotatorischer Antrieb ausführbar. Vorzugsweise wird das Werkstück auf dem Förderband angetrieben in x Richtung und ist an den in der Figur 1 mit Strichen gekennzeichneten Stellen zu schneiden. Hierbei ist der Abstand der Striche vorzugsweise konstant.

Das Förderband und somit das Werkstück wird mit einer Geschwindigkeit v_Band bewegt, die ebenfalls vorzugsweise konstant ist - zumindest in einem Zeitbereich um den Schnitt herum.

Mittels eines Linearantriebs ist das Werkzeug in x-Richtung bewegbar, also ein Wegstück mitbewegbar mit dem Werkstück.

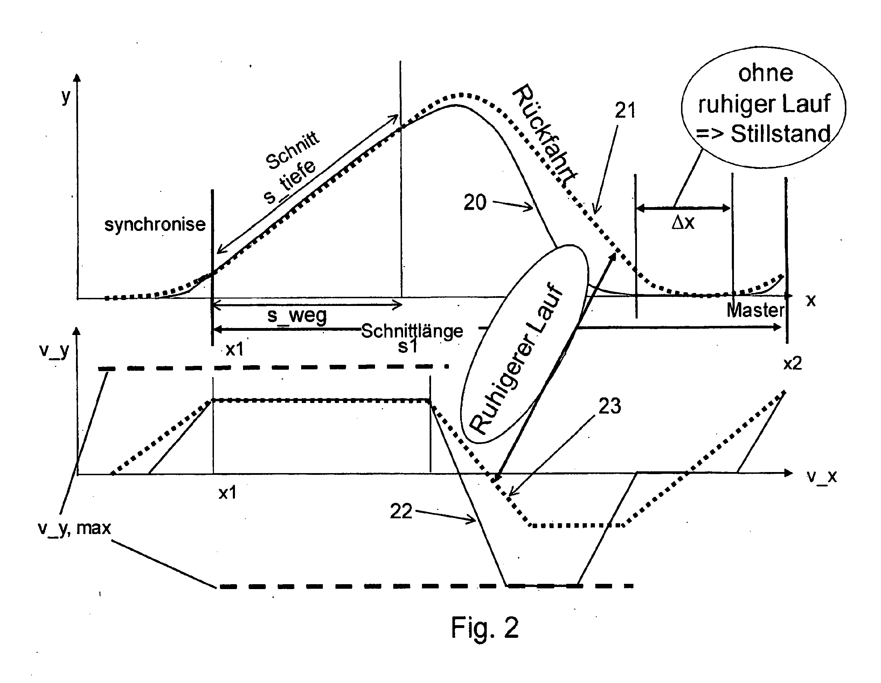

In der Figur 2 ist ein Orts-Funktionsverlauf 20, also die Slave-Position als Funktion der Master-Position, gezeigt, bei dem zwar während des Schnitts das Werkzeug aufsynchronisiert ist und somit sich mit dem Förderband mit dessen Fördergeschwindigkeit mitbewegt, aber nach Ausführen des Schnitts dann mit maximaler Beschleunigung abgebremst und zurückbewegt wird, um sich mit dem nächsten Schnittpunkt x1 mitzubewegen. Da dann gemäß dem in Figur 2 gezeigten Beispiel das Werkzeug zu früh an die Ausgangsposition zurückgekehrt ist, muss der Slave eine Zeitlang warten, bis der nächste Schnittpunkt x1 naht und der Slave wiederum aufsynchronisiert werden muss. Das Wartezeitintervall entspricht dem Masterweg Δx. Um einen sanfteren Verlauf zu erhalten, ist es dem Fachmann ermöglicht, die Beschleunigungen zu reduzieren und somit auch das Wartezeitintervall zu verkürzen. Allerdings sind bei dieser Reduzierung mehrere Randbedingungen und Parameter in gegenseitiger Beeinflussung zu beachten, so dass ein optimaler Verlauf nur schwerlich erreichbar ist. Denn schon im einfachsten Fall entspricht dieses optimieren dem Finden eines Extremums im mindestens vierdimensionalen Raum, der zumindest die Bremsbeschleunigung des Slaveantriebs und des Linearantriebs sowie die positive Beschleunigung des Slaveantriebs und des Linearantriebs umfasst, wobei für jede Förderbandgeschwindigkeit ein anderer Wert optimal ist.

Im unteren Teil der Figur 2 ist der zugehörige Geschwindigkeitsverlauf 22 als Funktion der Masterposition bei maximaler Beschleunigung gezeigt.

In Figur 2 ist auch ein erfindungsgemäßer Orts-Funktionsverlauf 21 gezeigt, bei dem kein Wartezeitintervall notwendig ist. Die Beschleunigungen sind schwächer und somit die Bewegung sanfter und schonender ausgeführt.

Im unteren Teil der Figur 2 ist der zugehörige Geschwindigkeitsverlauf 23 als Funktion der Masterposition bei maximaler Beschleunigung gezeigt.

Zum Ausführen der erfindungsgemäßen Bewegung wird zunächst eine Bandgeschwindigkeit rechnerisch angesetzt. Weitere Eingangsgrößen für die Berechnung sind Schnitttiefe, maximale Beschleunigung des Servoantriebs a_Servo, max, Außerdem werden die Randbedingungen beachtet, wie beispielsweise die maximale Geschwindigkeit des Servoantriebs v_Servo, max, wobei dieser Wert begrenzend wirkt. Aus diesen Werten wird dann der Schnittbereich s_weg bestimmt. Dabei treibt der erste Slaveantrieb die Bewegung quer zum Förderband an.

Im nächsten Schritt wird weiter unter Berücksichtigung der maximal zulässigen Beschleunigung des Linearantriebs a_lin, max und den begrenzend wirkenden Werten der maximalen Geschwindigkeit v_lin, max des Linearantriebs in x-Richtung und unter Berücksichtigung des maximalen Verfahrwegs in y-Richtung y_max die Schnittlänge bestimmt. Diese Schnittlänge in x-Richtung, also der Abstand auf dem Förderband zwischen zwei benachbarten Schnittpositionen wird verglichen mit der vorgegebenen wirklichen Schnittlänge s1.

Ist die bestimmte Schnittlänge kleiner als die vorgegebene Schnittlänge s1, wird die Bandgeschwindigkeit erhöht und die rechnerische Bestimmungsschritte wiederholt.

Diese Iteration wird fortgesetzt, bis die bestimmte Schnittlänge der vorgegebenen Schnittlänge s1 gleicht oder nur geringfügig kleiner ist, insbesondere innerhalb eines Toleranzbandes.

Auf diese Weise ist dann der erfindungsgemäße Sollpositionsverlauf bestimmt und die zugehörige, zum Durchfahren des Verlaufs maximal mögliche Bandgeschwindigkeit bekannt.

Der Sollpositionsverlauf ist somit bestimmt und der Slaveantrieb sowie der Linearantrieb sind nun Abhängigkeit von der Position des Masterantriebs gemäß dem Sollkurvenverlauf regelbar.

### Bezugszeichenliste

- 1: Werkzeug, angetrieben vom Slaveantrieb
- 2: Werkstück
- 3: Förderband mit Masterantrieb
- 20: Orts-Funktionsverlauf mit maximaler Beschleunigung
- 21: erfindungsgemäßer Orts-Funktionsverlauf
- 22: Geschwindigkeitsfunktionsverlauf bei maximaler Beschleunigung
- 23: erfindungsgemäßer Geschwindigkeitsfunktionsverlauf bei maximaler Beschleunigung

## Patentansprüche

1. Verfahren zur Bestimmung eines optimierten Sollkurvenverlaufs bei einer mehrachsigen Maschine zur fliegenden Bearbeitung von Fördergut,
wobei das Fördergut von einem als erste Maschinenachse der Maschine vorgesehenen Masterantrieb mit einer Fördergeschwindigkeit beförderbar ist,
wobei ein das Fördergut bearbeitendes Werkzeug von einem ersten, als zweite Maschinenachse der Maschine vorgesehenen Slaveantrieb quer zur Fördergeschwindigkeitsrichtung bewegbar angeordnet ist,
wobei ein zweiter, als dritte Maschinenachse der Maschine vorgesehenen Slaveantrieb, insbesondere Linearmotor oder Spindelmotor, vorgesehen ist, von dem das Werkzeug entlang der Förderrichtung bewegbar ist,
**dadurch gekennzeichnet, dass**
- in einem ersten Schritt wird aus einer Fördergeschwindigkeit (v_Foerder), einer **Bearbeitungstiefe,** insbesondere einer quer zur Fördergeschwindigkeitsrichtung liegenden **Bearbeitungstiefe,** und aus der maximalen Beschleunigung und Bremsbeschleunigung des ersten slaveantriebs (a_Servo,max) ein **Bearbeitungsbereich** (s_weg) berechnet,
- in einem zweiten Schritt unter Berücksichtigung der maximal zulässigen Beschleunigung (a_lin, max) des zweiten Slaveantriebs, insbesondere Linearantriebs, die **Bearbeitungslänge** s1(v_Foerder) in Förderrichtung bestimmt wird,
- in einem dritten Schritt diese **Bearbeitungslänge** (s1(v_Foerder)) verglichen wird mit einer vorgegebenen **Soll-Bearbeitungslänge** (s1) und dann der erste und zweite Schritt solange mit einer jeweils veränderten, **also** jeweils zur vorher verwendeten erhöhten, Fördergeschwindigkeit (v_Foerder) wiederholt werden bis die **Bearbeitungslänge** (s1(v_Foerder)) der vorgegebenen **Soll-Bearbeitungslänge** (s1 ) gleicht oder nur eine vorgegebene Abweichung aufweist oder unterschreitet,
- in einem vierten Schritt die zu den letzten beiden ausgeführten ersten und zweiten Schritten zugehörigen Positionsverläufe der beiden Slaveantriebe in Abhängigkeit von der jeweiligen Position des Masterantriebs als Sollpositionsverläufe abgespeichert werden, wobei die zuletzt verwendet Fördergeschwindigkeit als maximal mögliche Fördergeschwindigkeit v_Foerder, max) abgespeichert wird.

2. Verfahren nach mindestens einem der vorangegangenen Ansprüche,
**dadurch gekennzeichnet, dass**
jeder Slaveantrieb in Abhängigkeit von der jeweiligen Position des Masterantriebs auf den jeweils zu der Position des Masterantriebs zugeordneten Sollpositionsverfauf hin geregelt wird.

3. Verfahren nach mindestens einem der vorangegangenen Ansprüche,
**dadurch gekennzeichnet, dass**
das Werkzeug ein Schneide-Werkzeug ist, insbesondere ein Messer oder ein anderes Mittel zum Schneiden aufweist, wie beispielsweise eine Kreissäge oder eine Schere.

4. Verfahren nach mindestens einem der vorangegangenen Ansprüche,
**dadurch gekennzeichnet, dass**
das Fördergut von dem Masterantrieb mit einer maximalen Fördergeschwindigkeit beförderbar ist..

5. Verfahren nach mindestens einem der vorangegangenen Ansprüche,
**dadurch gekennzeichnet, dass**
ein das Fördergut bearbeitendes Werkzeug von einem ersten Slaveantrieb quer zur Fördergeschwindigkeitsrichtung mit einer maximalen Beschleunigung beschleunigbar und mit einer maximalen Bremsbeschleunigung abbremsbar ist.

6. Verfahren nach mindestens einem der vorangegangenen Ansprüche,
**dadurch gekennzeichnet, dass**
ein zweiter Slaveantrieb vorgesehen ist, von dem das Werkzeug entlang der Förderrichtung bewegbar ist bis zu einem maximalen **Bearbeitungslängenwert.**

7. Verfahren nach mindestens einem der vorangegangenen Ansprüche,
**dadurch gekennzeichnet, dass**
beim ersten Schritt die maximale Geschwindigkeit des Servoantriebs v_Servo, max als begrenzender Wert wirksam ist.

8. Verfahren nach mindestens einem der vorangegangenen Ansprüche,
**dadurch gekennzeichnet, dass**
beim zweiten Schritt die Geschwindigkeit des zweiten Slaveantriebs in Förderrichtung begrenzt wird durch die maximale Geschwindigkeit v_lin, max des und durch den maximalen Verfahrweg y_max des zweiten Slaveantriebs quer zur Förderrichtung.

9. Verfahren nach mindestens einem der vorangegangenen Ansprüche,
**dadurch gekennzeichnet, dass**
die **Bearbeitungslänge** der Abstand in Förderrichtung zwischen zwei in Förderrichtung aufeinander folgenden Positionen ist, bei denen das Werkzeug in Wirkverbindung mit dem Fördergut tritt, insbesondere eine **Bearbeitung** in Querrichtung beginnt.

## Claims

1. A method for determining an optimised desired curve path in a multi-axis machine for flying machining of material being conveyed,
wherein the material being conveyed can be conveyed at a conveying speed by a master drive provided as the first machine axis of the machine,
wherein a tool which machines the material being conveyed is arranged to be movable transversely to the direction of conveying speed by a first slave drive provided as the second machine axis of the machine,
wherein a second slave drive which is provided as the third machine axis of the machine, in particular a linear motor or spindle motor, is provided, by which the tool can be moved along the direction of conveyance,
**characterised in that**
- in a first step, a machining region (s_weg) is calculated from a conveying speed (v_Foerder), a machining depth, in particular a machining depth lying transversely to the direction of conveying speed, and from the maximum acceleration and braking acceleration of the first slave drive (a_Servo, max),
- in a second step, taking into account the maximum permissible acceleration (a_lin, max) of the second slave drive, in particular linear drive, the machining length s1(v_Foerder) in the direction of conveyance is determined,
- in a third step, this machining length (s1(v_Foerder)) is compared with a specified desired machining length (s1) and then the first and second step are repeated with in each case a changed conveying speed (v_Foerder), i.e. one which is increased in each case relative to the one used previously, until the machining length (s1(v_Foerder)) is equal to the specified desired machining length (s1) or has only a specified deviation or becomes less than it,
- in a fourth step, the position curves of the two slave drives associated with the last two first and second steps carried out are stored as desired position curves dependent on the respective position of the master drive, the conveying speed last used being stored as maximum possible conveying speed (v_Foerder, max).

2. A method according to at least one of the preceding claims, **characterised in that** each slave drive is regulated dependent on the respective position of the master drive in response to the desired position curve in each case associated with the position of the master drive.

3. A method according to at least one of the preceding claims, **characterised in that** the tool is a cutting tool, in particular has a blade or another means for cutting, such as for example a circular saw or shears.

4. A method according to at least one of the preceding claims, **characterised in that** the material being conveyed can be conveyed by the master drive with a maximum conveying speed.

5. A method according to at least one of the preceding claims, **characterised in that** a tool which machines the material being conveyed can be accelerated transversely to the direction of conveying speed with a maximum acceleration and can be braked with a maximum braking acceleration by a first slave drive.

6. A method according to at least one of the preceding claims, **characterised in that** a second slave drive is provided by which the tool is movable along the direction of conveyance up to a maximum machining-length value.

7. A method according to at least one of the preceding claims, **characterised in that** in the first step the maximum speed of the servo drive v_Servo, max is effective as a limiting value.

8. A method according to at least one of the preceding claims, **characterised in that** in the second step the speed of the second slave drive in the direction of conveyance is limited by the maximum speed v_lin, max of the and by the maximum displacement path y_max of the second slave drive transversely to the direction of conveyance.

9. A method according to at least one of the preceding claims, **characterised in that** the machining length is the distance in the direction of conveyance between two positions which follow one another in the direction of conveyance at which the tool comes into active connection with the material being conveyed, in particular begins machining in the transverse direction.

## Revendications

1. Procédé de détermination d'un tracé de courbe nominale optimisé sur une machine à plusieurs axes pour l'usinage à la volée d'un produit transporté,
lequel produit transporté peut être transporté à une vitesse de transport par un entraînement maître prévu comme premier axe de machine de la machine,
un outil qui usine le produit transporté étant disposé de manière à pouvoir être déplacé transversalement à la direction de vitesse de transport par un premier entraînement esclave prévu comme deuxième axe de machine de la machine,
un deuxième entraînement esclave, en particulier un moteur linéaire ou un moteur de broche, prévu comme troisième axe de machine de la machine étant prévu, par lequel l'outil peut être déplacé le long de la direction de transport,
**caractérisé en ce que**
- dans une première étape, une zone d'usinage (s_weg) est calculée à partir d'une vitesse de transport (v_Foerder), d'une profondeur d'usinage, en particulier d'une profondeur d'usinage transversalement à la direction de vitesse de transport, et à partir de l'accélération et de la décélération maximales du premier slave-entraînement (a_Servo, max),
- dans une deuxième étape, la longueur d'usinage s1(v_Foerder)) dans la direction de transport est déterminée en tenant compte de l'accélération maximale admissible (a_lin, max) du deuxième entraînement esclave, en particulier de l'entraînement linéaire,
- dans une troisième étape, cette longueur d'usinage (s1(v_Foerder)) est comparée avec une longueur d'usinage nominale prédéfinie (s1) et ensuite la première et la deuxième étapes sont répétées avec une vitesse de transport (v_Foerder) chaque fois modifiée, donc chaque fois plus élevée que celle utilisée précédemment, jusqu'à ce que la longueur d'usinage (s1(v_Foerder)) soit égale à la longueur d'usinage nominale prédéfinie (s1) ou présente ou soit inférieure seulement à un écart prédéfini,
- dans une quatrième étape, les tracés de position des deux entraînements esclaves associés aux deux dernières premières et deuxièmes étapes exécutées sont enregistrés comme tracés de position nominaux en fonction de la position respective de l'entraînement maître, la vitesse de transport utilisée en dernier lieu étant enregistrée comme vitesse de transport maximale possible (v_Foerder, max).

2. Procédé selon au moins une des revendications précédentes,
**caractérisé en ce que**
chaque entraînement esclave est régulé en fonction de la position respective de l'entraînement maître sur la base du tracé de position nominal respectivement associé à la position de l'entraînement maître.

3. Procédé selon au moins une des revendications précédentes,
**caractérisé en ce que**
l'outil est un outil de coupe, en particulier un couteau ou un autre moyen de coupe, comme par exemple une scie circulaire ou des ciseaux.

4. Procédé selon au moins une des revendications précédentes,
**caractérisé en ce que**
le produit transporté peut être transporté à une vitesse de transport maximale par l'entraînement maître.

5. Procédé selon au moins une des revendications précédentes,
**caractérisé en ce que**
un outil qui usine le produit transporté peut être accéléré avec une accélération maximale et décéléré avec une décélération maximale transversalement à la direction de vitesse de transport par un premier entraînement esclave.

6. Procédé selon au moins une des revendications précédentes,
**caractérisé en ce que**
un deuxième entraînement esclave est prévu, par lequel l'outil peut être déplacé le long de la direction de transport jusqu'à une valeur de longueur d'usinage maximale.

7. Procédé selon au moins une des revendications précédentes,
**caractérisé en ce que**
dans la première étape, la vitesse maximale du servo-entraînement v_Servo, max est active comme valeur limitante.

8. Procédé selon au moins une des revendications précédentes,
**caractérisé en ce que**
dans la deuxième étape, la vitesse du deuxième entraînement esclave dans la direction de transport est limitée par la vitesse maximale v_lin, max de l'entraînement linéaire et par la course maximale y_max du deuxième entraînement esclave transversalement à la direction de transport.

9. Procédé selon au moins une des revendications précédentes,
**caractérisé en ce que**
la longueur d'usinage est la distance dans la direction de transport entre deux positions successives dans la direction de transport dans lesquelles l'outil entre en interaction avec le produit transporté, en particulier commence un usinage dans la direction transversale.
